# EUROPEAN PATENT SPECIFICATION

(11) **EP 3 321 199 B1**
(45) Date of publication and mention of the grant of the patent: **15.03.2023**
(21) Application number: 16824232.9
(22) Date of filing: 23.06.2016
(51) Int. Cl.: B65D 1/02, A23L 27/60, B65D 1/32, B65D 51/24, B65D 23/08, B65D 65/20

(54) **LIQUID CONDIMENT CONTAINER, AND LIQUID CONDIMENT PACKED IN CONTAINER**
FLÜSSIGGEWÜRZBEHÄLTER UND IM BEHÄLTER VERPACKTES FLÜSSIGGEWÜRZ
CONTENANT POUR CONDIMENT LIQUIDE ET CONDIMENT LIQUIDE CONDITIONNÉ DANS UN CONTENANT

(30) Priority: 10.07.2015 JP 2015139086; 31.08.2015 WO PCT/JP2015/074757
(43) Date of publication of application: 16.05.2018
(73) Proprietor: Kewpie Corporation, Tokyo 150-0002 (JP)
(72) Inventor: TAKAYAMA, Takashi, Tokyo 182-0002 (JP); KAWASAKI, Shota, Tokyo 182-0002 (JP)
(74) Representative: Winter, Brandl - Partnerschaft mbB
(86) International application number: PCT/JP2016/068617
(87) International publication number: WO 2017/010252

(56) References cited:
- EP-A1- 2 801 281
- WO-A1-2014/011223
- JP-A- 2002 173 123
- JP-A- 2004 123 190
- JP-A- 2007 062 783
- JP-A- 2007 308 195
- JP-A- 2012 224 605
- JP-A- 2013 001 441
- JP-A- 2013 001 441
- US-A- 5 819 991
- US-A1- 2006 111 680

## Description

### TECHNICAL FIELD

The present invention relates to a liquid condiment container, which includes a bottle formed by blow molding and a cap, and more specifically, to a liquid condiment container in which the bottle has a particular restoring force, and to a packaged liquid condiment filled in the liquid condiment container.

### BACKGROUND ART

There have hitherto been proposed a plurality of various containers as a container for a high-viscosity acidic emulsified liquid condiment including mayonnaise-like food (see, for example, Patent Literature 1).

In Patent Literature 1, there has been proposed a bottle being a container mainly made of a polyethylene (PE) resin and a resin having a gas barrier property, in which the basis weight per 100 g of mayonnaise-like food is 4.0 g or less, and a moderate stiffness, an excellent handling property, and a light weight are achieved.

However, the container of Patent Literature 1 has a problem in that the shape of the container is deformed as mayonnaise being contents is reduced, and the original aesthetic appearance of the container is impaired.

Contrary to this, as a container for a beverage having a low viscosity and the like, there has been proposed such a bottle that the shape of the container is less liable to be deformed even when the content is reduced through use of polyethylene terephthalate (PET) (see, for example, Patent Literature 2) or high-density polyethylene (HDPE) (see, for example, Patent Literature 3).

However, a bottle made of PET or HDPE has the following problem. The bottle made of PET or HDPE has no flexibility, and hence, when a high-viscosity liquid condiment is filled into to the bottle, the content is hardly discharged until a certain force is applied to the bottle, whereas when the applied force exceeds a certain force level, the bottle is rapidly deformed to discharge the content at once.

Document JP 2013 001441 discloses a liquid condiment container according to the preamble of claim 1.

### CITATION LIST

### PATENT LITERATURE

PTL 1: JP 2010-058808 A
PTL 2: JP 1-182253 A
PTL 3: JP 2002-363297 A

### SUMMARY OF INVENTION

### TECHNICAL PROBLEM

The present invention has been made in view of the above-mentioned circumstances, and an object of the present invention is to provide such a liquid condiment container that a bottle is flexibly deformed to easily discharge a content even when the content is a high-viscosity liquid condiment, that the shape of the container is less liable to be deformed even when the content is reduced, and that the original aesthetic appearance of the container is less liable to be impaired, and to provide a packaged liquid condiment filled in the liquid condiment container.

### SOLUTION TO PROBLEM

In order to achieve the above-mentioned object, the present invention provides a liquid condiment container according to claim 1. Further advantageous embodiments are the subject-matter of the dependent claims.

### ADVANTAGEOUS EFFECTS OF INVENTION

According to the present invention, it is possible to provide such a liquid condiment container that the bottle is flexibly deformed to easily discharge the content even when the content is a high-viscosity liquid condiment, that the shape of the container is less liable to be deformed even when the content is reduced, and that the original aesthetic appearance of the container is less liable to be impaired, and to provide the packaged liquid condiment filled in the liquid condiment container.

Further, according to the present invention, even when the high-viscosity liquid condiment is discharged in an extremely small amount or in a large amount, the discharge amount and discharge speed may be controlled with satisfactory responsiveness with a small force.

### BRIEF DESCRIPTION OF DRAWINGS

FIG. 1 is a front view of a liquid condiment container according to an embodiment of the present invention and a mouth.
FIG. 2 is a side view of the liquid condiment container according to the embodiment.
FIG. 3 is a sectional view of the liquid condiment container according to the embodiment taken along the line E-E of FIG. 1.
FIG. 4 is a front view for illustrating a liquid condiment container according to Modification Example 1 of the present invention in an inverted state.
FIG. 5 is a front view for illustrating a liquid condiment container according to Modification Example 2 of the present invention in an inverted state.
FIG. 6 is a plan view of a cap of the liquid condiment container according to Modification Example 2-1.
FIG. 7 is a view for illustrating a related-art liquid condiment container made of LDPE, the liquid condiment container according to the embodiment in the inverted state, and the liquid condiment container according to Modification Example 2-2 of the present invention side by side.
FIG. 8 is a view for illustrating related-art liquid condiment containers in the inverted state made of HDPE, PET, and PP, and the liquid condiment container according to the embodiment in the inverted state side by side.
FIG. 9 is a front view of a cap portion of a liquid condiment container according to Modification Example 3 of the present invention.
FIG. 10 is a view for illustrating a method of measuring a pushing force in Examples and Comparative Examples.
FIG. 11 is a graph for showing a relationship between a basis weight of the liquid condiment container according to the embodiment and an initial volume of the liquid condiment, in which the horizontal axis represents the initial volume (cm³) of the liquid condiment and the vertical axis represents the basis weight (g) excluding the mouth of a bottle.

### DESCRIPTION OF EMBODIMENTS

Now, an exemplary embodiment of the present invention is described in detail with reference to the drawings. The embodiment described below does not unduly limit the content of the present invention described in Claims. Further, all the configurations described below do not necessarily correspond to indispensable constituent features of the present invention.

In the following description, unless otherwise stated, description is given under a condition that an up-and-down direction of a liquid condiment container is an up-and-down direction in an upright state with a cap being positioned upward.

### 1. Embodiment

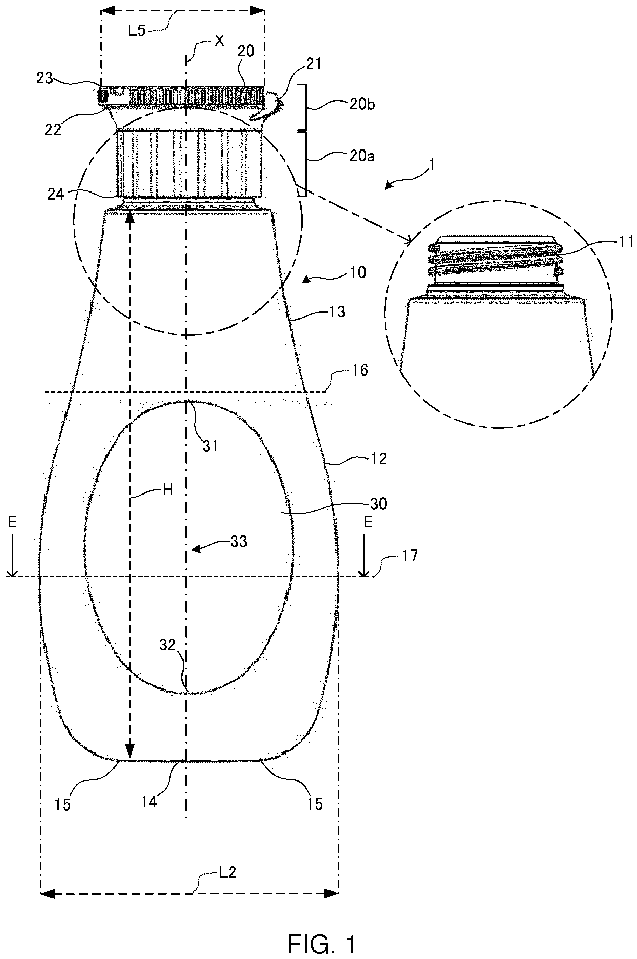

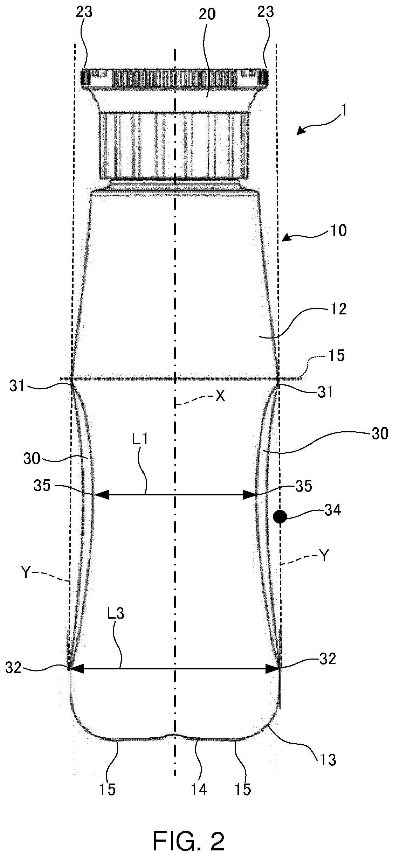

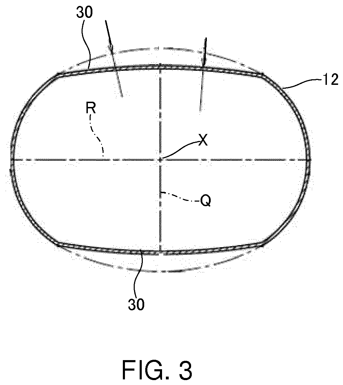

A liquid condiment container 1 according to an embodiment of the present invention is described with reference to FIG. 1 to FIG. 3. FIG. 1 is a front view of the liquid condiment container 1 according to the embodiment and a mouth 11. FIG. 2 is a side view of the liquid condiment container 1 according to the embodiment. FIG. 3 is a sectional view of the liquid condiment container 1 according to the embodiment taken along the line E-E of FIG. 1.

### 1.1. Overview of Liquid Condiment Container

As illustrated in FIG. 1 and FIG. 2, the liquid condiment container 1 includes a bottle 10 and a cap 20. The bottle 10 is obtained by blow molding. As the blow molding, known molding methods, for example, direct blow molding, injection blow molding, and injection stretch blow molding, may be applied. The cap 20 is made of a resin, and is obtained by integrally subjecting a lower portion 20a to be fixed to the mouth 11 of the bottle 10 and an upper portion 20b that may be opened or closed with respect to the lower portion 20a through a hinge 21 to injection molding or compression molding.

The liquid condiment container 1 is filled with a condiment. The condiment is a liquid condiment having a viscosity of from 5 Pa·s to 500 Pa·s, and the liquid condiment container 1 has an initial volume of from 100 cm³ to 700 cm³. As the condiment, there are given high-viscosity condiments, for example, mayonnaise-like food including mayonnaise, ketchup, cream, sauce, and jam. The viscosity of the condiment is a value calculated based on a reading obtained by a BH-type viscometer when a rotor No. 6 is rotated twice after the start of measurement under the condition of a product temperature of 20°C and a rotation speed of 2 rpm. Further, the specific gravity of the above-mentioned condiments is from 0.9 to 1.1, that is, about 1.0, and hence the weight (g) may be used instead of the volume (cm³) as the initial volume.

The initial volume of the liquid condiment container 1 may be set to 100 cm³ or more and 500 cm³ or less. With the initial volume of 500 cm³ or less, the liquid condiment container 1 may stably stand by itself even in an inverted state.

### 1.2. Bottle

As illustrated in FIG. 1 and FIG. 2, the bottle 10 includes the mouth 11, a body 12, and a bottom 14. The mouth 11 is hidden by the cap 20, and hence the mouth 11 is illustrated in a region surrounded by the broken line on the right side of FIG. 1.

### 1.2.1. Mouth

The mouth 11 is a portion to which the cap 20 is attached. The mouth 11 has an upper end having an opening (not shown). The mouth 11 has a side surface on which a male thread is formed, and the male thread is threadedly engaged with a female thread formed in an inner side of the lower portion 20a of the cap 20 to close the opening of the mouth 11. Therefore, when the upper portion 20b of the cap 20 is flipped up, an ejection port (not shown) formed in the lower portion 20a communicating to the opening of the mouth 11 appears, and thus the condiment may be discharged.

### 1.2.2. Bottom

The bottom 14 is a substantially flat portion that is formed at a lower end of the bottle 10 and closes the bottle 10. The bottom 14 has an outermost edge that serves as a ground portion 15 in the upright state with the mouth 11 being positioned upward. A portion on an inner side surrounded by the ground portion 15 has a raised bottom shape that is slightly dented upward. The upright state refers to a state in which the ground portion 15 of the liquid condiment container 1 is placed on a flat surface, for example, a table. In the liquid condiment container 1 in the upright state, a center axis X of the bottle 10 extends in a vertical direction. The center axis X passes through the center of the mouth 11 and extends in the vertical direction in the upright state.

### 1.2.3. Body

The body 12 is a tubular portion that extends from the opening of the mouth 11 to the bottom 14 and is closed at the bottom 14. The body 12 includes a shoulder 13 on an upper side of a virtual line 16 having a height of 2/3 of an entire height H of the body 12. The shoulder 13 is gradually reduced in diameter toward the upper side. The body 12 includes a flat shape portion in horizontal transverse section in the upright state. In FIG. 3, there is illustrated the flat shape portion of the body 12 in a cross section (horizontal transverse section) taken along the line E-E of FIG. 1.

The flat shape portion is formed at least in a region from the ground portion 15 to the virtual line 16 having a height of 2/3 of the entire height H of the body 12. In this case, the flat shape portion is formed in an entire region of the body 12 excluding a portion of the body 12, which is connected to the mouth 11.

The flat shape portion has a short axis Q and a long axis R that are orthogonal to the center axis X of the bottle 10. Consequently, the short axis Q and the long axis R are orthogonal to each other. Surfaces of the body 12, which cross the short axis Q, are a front surface and a rear surface of the body 12. Surfaces of the body 12, which cross the long axis R, are side surfaces of the body 12. As illustrated in FIG. 3, in the flat shape portion, the body 12 is formed into a substantially elliptic shape. The flat shape portion has panels 30 in such a manner that regions of the front surface and the rear surface opposed to each other are partially cut away through use of an arc indicated by the alternate long and short dash line, which is larger than an elliptic arc. It is only necessary that the flat shape portion have a shape extending in a direction along the long axis R as illustrated in FIG. 3. For example, the flat shape portion may have a substantially elliptic shape as illustrated in FIG. 3 or may be a combination of a plurality of arcs, parabolas, or the like. The flat shape portion may partially include a straight line, and may have, for example, a substantially rectangular shape or other substantially polygonal shapes with corners being chamfered.

As described above, due to the presence of the portion having a flat shape, it is easy for the user to hold the liquid condiment container 1 and push the liquid condiment container 1 along the direction of the short axis Q, and the user is easily allowed to recognize a portion to be pushed for pushing out the condiment.

### 1.2.3.1. Thickness

The thickness of the body 12 up to the virtual line 16 having a height of 2/3 of the entire height H of the body 12 may be set to 0.4 mm or more and 1.1 mm or less. That is, the thickness of the body 12 falls within a thickness range of 0.4 mm or more and 1.1 mm or less even when measured at any position up to the virtual line 16 having a height of 2/3 of the entire height H of the body 12. Further, the thickness of the body 12 up to the virtual line 16 having a height of 2/3 of the entire height H of the body 12 may be set to 0.4 mm or more and less than 1.05 mm, in particular, the thickness of the body 12 may be set to 0.50 mm or more and 1.04 mm or less. The thickness of the body 12 is larger as compared to that of a related-art liquid condiment container made of low-density polyethylene (LDPE) as a main component. Therefore, even when the content is pushed out, a pushed portion gradually expands to return to the original shape. As a result, the liquid condiment container 1 may be maintained in a state close to the initial shape (the transverse section of the body 12 has a flat shape) even when the content is reduced. Further, through use of low-density polyethylene, the body 12 has flexibility even when the thickness thereof is increased, and hence an extremely strong force is not required for pushing the body 12.

### 1.2.3.2. Pushing Force

The area of a first low pushing force region, in which a highest pushing force is less than 21 N when the front surface and the rear surface are pushed with a push rod having a circular pressing surface with a diameter of 10 mm in a direction parallel to the short axis under a state in which the bottle 10 is completely filled with air until the air in the bottle 10 is discharged by 10% of the initial volume of the bottle 10, may be set to 40% or more and 80% or less of a first projection area of the body 12 projected onto an orthographic projection surface being a flat surface perpendicular to the short axis Q. The measurement is performed under the measurement condition of a temperature of 25°C. When a pushing force of more than 21 N is required, it is difficult to push out the content even by pushing with one forefinger. The area of a second low pressing force region, in which a highest pushing force is less than 14 N when a pushing force is similarly measured, may be set to 50% or more and 80% or less. When the pushing force is less than 14 N, the content may be pushed out even by pushing with one forefinger. The content may be sufficiently discharged even with a relatively small force as described above. Therefore, the situation in which a bottle is rapidly deformed to discharge the content at once as in a PET bottle and a HDPE bottle is less liable to occur. A specific measurement method for a highest pushing force is described later in Examples. Each highest pushing force is measured at a plurality of points (N points) of the front surface of the body 12 under the measurement condition of a temperature of 25°C, and the ratio (n/N×100(%)) of the number of points (n points) at which the pushing force is less than a predetermined pushing force may be calculated as the area of the first low pushing force region (second low pushing force region) with respect to the first projection area.

### 1.2.3.3 Panel

When the panel 30 is arranged on each of the front surface and the rear surface of the body 12, a large number of preferred effects as described below are exhibited. Through arrangement of the panel 30 that has not been adopted in a container for a high-viscosity condiment in the related art, even a pressure change in the liquid condiment container 1 may be flexibly handled. That is, the deformation of the body 12 caused by a change in inner pressure may be prevented by deformation of the panel 30, and hence the influence on the outer appearance of the body 12 is reduced.

The panel 30 is a region that is dented on an inner side from an outer shape of the body 12. A ridge line of the panel 30 is formed of a portion in which two arcs having different curvatures are connected to each other as illustrated in FIG. 3, and the ridge line has a substantially elliptic shape elongated in the vertical direction when viewed in a front view. In this case, the contour of the panel 30 appears as the ridge line. However, the present invention is not limited thereto, and the contour portion may be gradually changed (ridge line may be blurred) partially or over the entire circumference.

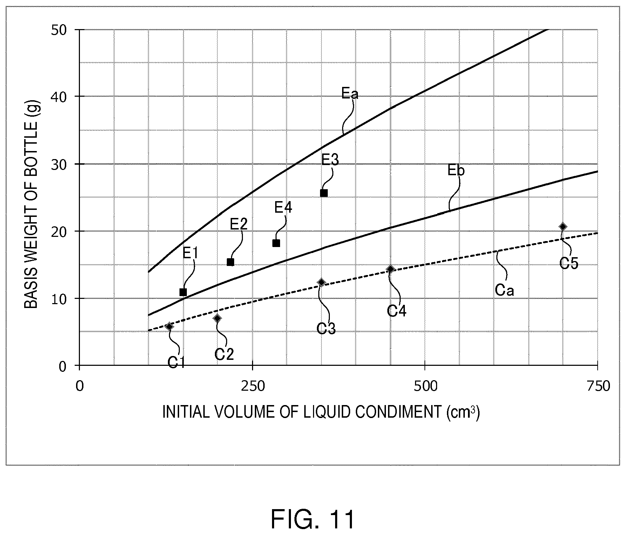

A second projection area of the panel 30 projected onto an orthographic projection surface being a flat surface perpendicular to the short axis Q may be set to 60% or less of the first projection area of the body 12 projected onto the orthographic projection surface. FIG. 11 is a front view, and hence the first and second projection areas are illustrated. When the area of the panel 30 occupying the body 12 is less than 60%, even in the case where the high-viscosity condiment is partially discharged to set the inside of the container to a negative pressure, the panel 30 is slowly deformed outward while taking in air from outside with a restoring force of the panel 30, and the container easily returns to a state close to the initial shape.

The panel 30 is positioned on a virtual line Y connecting an upper end 31 and a lower end 32 of the panel 30, which cross the short axis Q, or on an inner side of the virtual line Y. That is, the panel 30 is a concave portion dented on an inner side of the body 12 when viewed in a vertical cross section. Even when a part of the content is discharged and air is sucked instead by pushing the body 12, then the cap is closed, and the inner pressure in the container increases due to the environmental temperature or the like, the inner pressure in the liquid condiment container 1 easily returns to a state close to the initial pressure through slow outward deformation of the panel 30. The panel 30 has a shape dented on an inner side of the body 12. Therefore, as compared to the case in which the panel 30 is not arranged, the volume reduction in the container is larger, for example, when the body 12 is pushed similarly by 5 mm, and the content is easily pushed out.

The panel 30 has a thickness of 0.5 mm or more and 1.1 mm or less on an inner side of the panel 30 and has a thickness of 0.90 mm or less at the upper end 31 of the panel 30 that crosses the short axis Q. The thickness of the upper end 31 may be set to be smaller than the thickness of a center portion 33 of the panel 30. When the thickness of the panel 30 in the vicinity of the upper end 31 is set to be relatively small, the panel 30 is likely to be deformed when the user pushes the portion in the vicinity of the upper end 31, and the content may be sufficiently discharged even with a small force. Further, it is preferred that the thickness of panel 30 on an inner side of the panel 30 be 0.5 mm or more and 1.05 mm or less, and the thickness of the panel 30 at the upper end 31 be 0.85 mm or less.

In an interval between the panel 30 on the front surface and the panel 30 on the rear surface at a position where the panels 30 cross the short axis Q in the upright state of the bottle 10, a first distance L1 between most concave portions 35 in which the interval between the panels 30 becomes smallest may be set to from 0.7 to 1.0 with respect to a second distance L3 between the lower ends 32 of the panels 30. The most concave portion 35 is a portion dented most on an inner side of the panel 30 in a direction along the center axis X. With this shape, it is easy for the user to push the panel 30, in particular, with the front surface and the rear surface, and handle the panel 30. Further, the ratio of the above-mentioned distances is 1.0 or less, and hence the liquid condiment container 1 is excellent in buckling strength. Further, even when the inner pressure in the liquid condiment container 1 increases due to the environmental temperature or the like, the pressure is absorbed by deformation of the panel, and hence the content is less liable to jet when the cap 20 is opened.

The height of the most concave portion 35 from the ground portion 15 is higher than the height of a middle point 34 between the upper end 31 and the lower end 32 of the panel 30 in the upright state of the bottle 10. When the most concave portion 35 is formed at a position higher than that of the middle point 34, it is easy for the user to hold the liquid condiment container 1 and push out the content when the user holds the liquid condiment container 1 upside down (in the inverted state) in order to put the condiment on cooked food or the like.

An upper end edge 23 of the cap 20 is positioned so as not to be brought into contact with the virtual line Y connecting the upper end 31 and the lower end 32 of the panel 30 that crosses the short axis Q. At the time of distribution to the market, a plurality of liquid condiment containers 1 are packed and transported. In this case, the caps 20 that are harder than the bottles 10 may be prevented from being brought into contact with each other to scratch the caps 20. In particular, it is desired from the viewpoint of a product value that the caps 20 be less liable to scratch each other when each of the caps 20 is covered up to the upper end edge 23 with a heat-shrinkable film as described later.

In this embodiment, description is given of an example in which the panel 30 is arranged on the body 12, but the present invention is not limited thereto. It is clear that the effects other than those peculiar to the panel 30 are obtained also in the case where the panel 30 is not arranged.

### 1.2.3.4. Ratio of Largest Width between Cap Top Surface and Body

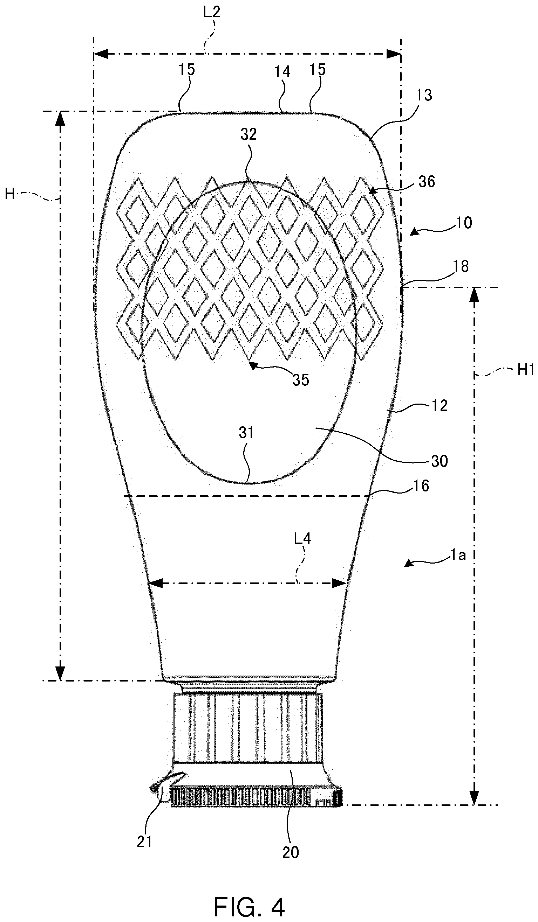

As illustrated in FIG. 1, a ratio (L5/L2) between a largest width L5 of a top surface of the cap 20, that is, a ground surface of the cap 20 that is grounded when the liquid condiment container 1 is inverted, and a largest width L2 of the body 12 may be set to be more than 0.40, further, 0.45 or more. The largest width L2 corresponds to a portion having a largest width in a horizontal direction in the body 12, which is described later with reference to FIG. 4. As the ratio (L5/L2) increases, the top surface of the cap 20 may support the center of gravity of the liquid condiment container 1 when the liquid condiment container 1 is inverted, and the liquid condiment container 1 is less liable to fall. For example, even when the liquid condiment container 1 is touched carelessly on a table, the liquid condiment container 1 is less liable to fall, and the stability in the inverted state is high. It is preferred that the ratio (L5/L2) be more than 0.40 because the stability of the inverted liquid condiment container 1 is high. When the ratio is 0.45 or more, the stability is further improved.

### 1.2.4. Material for Bottle

The bottle 10 has a single layer structure made of low-density polyethylene (hereinafter sometimes referred to simply as "LDPE") as a main component or a multilayer structure including one or more layers made of low-density polyethylene as a main component. When the multilayer structure is adopted, the total thickness of the layers made of low-density polyethylene as a main component in the multilayer structure is 80% or more of the thickness of the bottle 10. That is, when there is one layer made of low-density polyethylene as a main component, the thickness of the layer is 80% or more of the thickness of the bottle 10. When there are a plurality of layers, the total thickness of the layers is 80% or more of the bottle 10. The thickness of the bottle 10 refers to the thickness of a wall of the bottle 10. Being made of low-density polyethylene as a main component means containing 50 mass% or more of low-density polyethylene which has a density of from 0.910 g/cm³ to 0.930 g/cm³ (based on Old JIS K6748:1995) and in which the ratio of ethylene as a monomer occupying a resin is 50 mol% or more.

Low -density polyethylene produced by a high-pressure method (HP-LDPE) is chosen as a main component of the bottle 10 as compared to linear low-density polyethylene (LLDPE), because the low-density polyethylene produced by a high-pressure method is relatively flexible and has a bending modulus of from 130 MPa to 370 MPa (based on a JIS K6922-2 method).

### 1.2.5. Inner Pressure

When air in the bottle 10 is sucked by 10% of the initial volume from a state in which the bottle 10 is completely filled with the air, the liquid condiment container 1 has an inner pressure of -1.0 kPa to -3.0 kPa (temperature at the time of measurement is 25°C) after 30 seconds from the suction. That is, the foregoing shows that, when the condiment is pushed out by 10% of the initial volume, a pressure (hereinafter expressed as "restoring force), with which the body 12 attempts to return to the original state, is generated. When the condiment is pushed out, the body 12 more rapidly returns to the original shape as the restoring force is larger. Such restoring force may be obtained by increasing the thickness of the body 12. Therefore, the liquid condiment container 1 is deformed flexibly to easily discharge the content through use of the bottle 10 made of LDPE even when the condiment is a high-viscosity liquid condiment, and the liquid condiment container 1 is less liable to remain deformed by virtue of the restoring force of the body 12 even when the content is reduced, with the result that the original aesthetic appearance of the container is less liable to be impaired. Further, when the restoring force is large, the original aesthetic appearance of the container may be maintained, and hence the liquid condiment container 1 may also maintain the self-standing property. As described above, it is not generally easy to satisfy both the easy discharge of the content and the increase in restoring force after deformation. In a related-art LDPE container, the restoring force after deformation is hardly generated. The reason for this is that the thickness of the body in the related-art LDPE container is extremely small. With the related-art container having an extremely small restoring force after deformation, once the container is deformed after discharging the content, the container is liable to fall and lose the self-standing property. Further, in the general container development, there has been no idea that the thickness of the body of the container is increased to such a degree that a sufficient restoring force is generated. The reason for this is as follows. For example, in order to achieve cost-cutting by reducing raw material cost of the container, the thickness of the container is decreased to reduce weight.

In particular, the liquid condiment container 1 may be stored in the inverted state so that the condiment may easily be pushed out. The ground area of the cap 20 is smaller than that of the bottom 14, and hence the liquid condiment container 1 is liable to fall in the inverted state as compared to the case where the liquid condiment container 1 is in the upright state. However, even in the inverted state, the liquid condiment container 1 is more rapidly restored after being deformed as compared to the related-art LDPE container and hence may be stably stored.

When the inside of the liquid condiment container 1 is set to a positive pressure, the content is less liable to jet, for example, in the following manner. The liquid condiment container 1 having the condiment filled therein is cooled in a refrigerator. After that, the liquid condiment container 1 is taken out from the refrigerator. The content is partially discharged, and air is sucked instead. After the air is cooled, the cap is closed. Further, the air that has been sucked is warmed to expand together with the condiment under a state of being placed at normal temperature. The flat shape portion of the body 12 and/or the panel 30 are deformed so as to expand outward, and the positive pressure in the liquid condiment container 1 is absorbed by the deformation. Therefore, even when the cap 20 is opened, the content is less liable to jet.

### 1.2.6. Initial Volume and Basis Weight

y/x^{2/3} is of from 0.35 to 0.65, where x (cm³) represents the initial volume of the bottle 10, and y (g) represents a basis weight excluding the mouth 11 of the bottle 10. The initial volume and the basis weight have a predetermined proportional relationship, which is described later by way of Examples and the like. y/x^{2/3} exhibits a value as large as from 0.35 to 0.65 as compared to that of the related-art liquid condiment container made of low-density polyethylene (LDPE) as a main component. Therefore, the liquid condiment container 1 may be maintained in a state close to the initial shape even when the content is reduced, y/x^{2/3} of from 0.35 to 0.65 is an indicator indicating that a mass per unit area of the bottle is large, that is, the thickness of a portion of the bottle 10 excluding the mouth 11 is large. The bottle 10 including the body 12 having a large thickness has a large restoring force as described above, and the liquid condiment container 1 may maintain a state close to the initial shape even when the content is reduced.

### 2. Modification Example 1

Next, a liquid condiment container 1a according to Modification Example 1 of the present invention is described with reference to FIG. 4. FIG. 4 is a front view for illustrating the liquid condiment container 1a according to Modification Example 1 in the inverted state.

As illustrated in FIG. 4, the body 12 of the liquid condiment container 1a has irregularities 36 on the surface on a lower side of the most concave portion 35 of the panel 30. The configuration other than the irregularities 36 is the same as that of the liquid condiment container 1 according to the above-mentioned embodiment, and hence description thereof is omitted. The user may easily hold the liquid condiment container 1a by virtue of the irregularities 36 and directly feel which portion of the container is held with a sense of touch. The irregularities 36 may be patterns, for example, mesh patterns and lattice patterns. Those patterns may also serve to identify a product. The recessed distance of a concave portion from the surface of the body 12 or the projecting distance of a convex portion therefrom may be set to from 0.1 mm to 2.0 mm.

The irregularities 36 are formed in a region from a height of, for example, 10 mm from the ground portion 15 to a height in the vicinity of the most concave portion 35 of the panel 30 excluding side surfaces.

Further, the ratio between a predetermined height and a predetermined width of the body 12 is described below in the liquid condiment container 1a according to Modification Example 1. The configuration other than the irregularities 36 is the same as that of the liquid condiment container 1 according to the above-mentioned embodiment.

In the body 12, an average value of the width L2 (indicating the width of a largest width portion 18 in FIG. 4) in the long axis R from the ground portion 15 to the virtual line 16 having a height of 2/3 of the entire height H of the body 12 may be set to from 1.4 times to 1.6 times an average value of a width L4 in the long axis R on an upper side (lower side in FIG. 4 in the inverted state) of the virtual line 16 having a height of 2/3. The position up to the virtual line 16 having a height of 2/3 is in the inverted state at the time of use. Therefore, a thick and easy-to-hold portion is arranged at a position higher than cooked food placed on a plate on a table or the like, and hence it is easy for the user to handle the container. Further, in the related-art relatively hard container, such as a PET bottle and a HDPE bottle, a portion to be held by the hand of the user is hard, and a region that does not allow the content to be discharged even when being pushed is large. Therefore, it is necessary to change how to hold the container. Meanwhile, according to the above-mentioned embodiment and Modification Example 1, the thick and easy-to-hold portion is also flexible, and hence the content may easily be discharged without changing how to hold the container.

In the body 12, in the largest width portion 18 in which the width in the long axis R becomes largest, a height Hl from the upper end edge 23 of the cap 20 in the inverted state of the bottle 10 to the largest width portion 18 may be set to 1.5 times to 1.7 times the width L2 of the largest width portion 18. With such ratio, the liquid condiment container 1a in the inverted state exhibits a beautiful outer appearance.

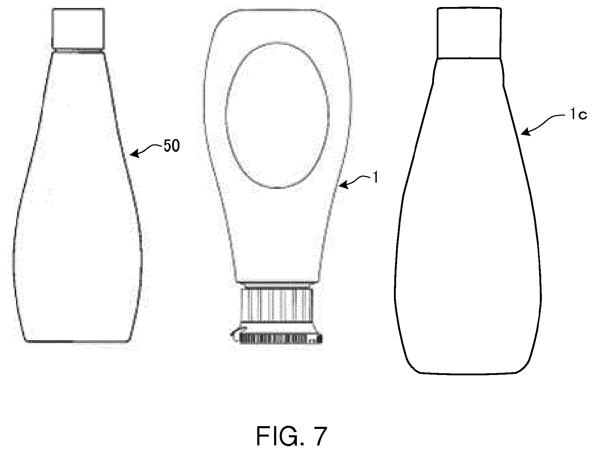

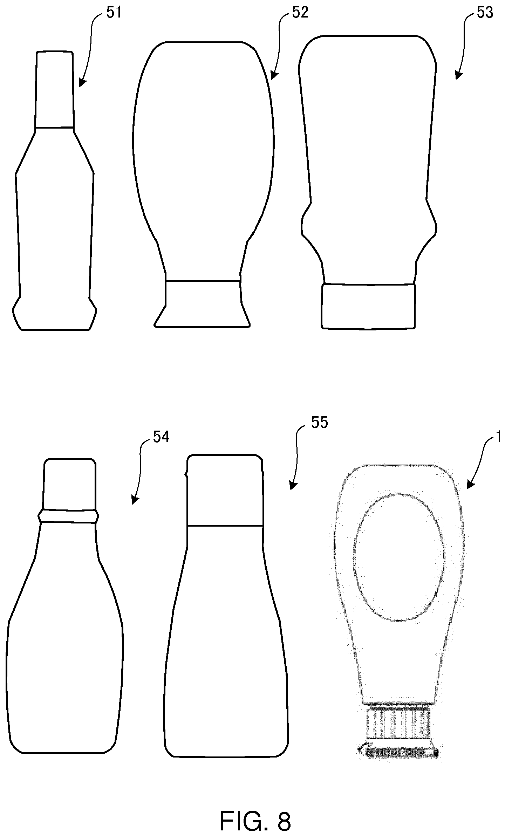

The foregoing may be understood, for example, from the comparison of an outer appearance between the liquid condiment container 1 according to the above-mentioned embodiment and related-art commercially available liquid condiment containers 50 to 55 (Reference Examples 1 to 6) in FIG. 7 and FIG. 8.

As illustrated in FIG. 7, when the liquid condiment container 1 is placed on a table, with the related-art liquid condiment container 50 to be used in an upward direction, tableware, for example, a plate having cooked food placed thereon on a table becomes an obstacle to holding a thickest portion (close to the center of gravity), and care should be taken. Alternatively, it is necessary to open the cap by holding a thin portion of the liquid condiment container 50 and then changing the held position to the thickest portion. The same also applies to the liquid condiment containers 51, 54, and 55 (Reference Examples 2, 5, and 6) illustrated in FIG. 8.

Further, with the related-art liquid condiment container to be used in the inverted state, for example, the liquid condiment containers 52 and 53 (Reference Examples 3 and 4) illustrated in FIG. 8, the container is thick also at a height of 1/3 from the top, and hence any portion is held by the hand. In spite of this, the container made of HDPE or PET is hard, and a portion that allows the condiment to be discharged by being pushed is limited, and it is necessary to change how to hold the container so that the portion may be pushed.

Meanwhile, when the liquid condiment container 1 according to the above embodiment of the invention is inverted as illustrated in FIG. 7 and FIG. 8, the thickest portion close to the center of gravity is arranged at a position higher than tableware, for example, a plate. Therefore, the condiment may be squeezed out by a simple process involving holding a portion close to the center of gravity with one hand in an ergonomically natural manner and opening the cap with the other hand without changing how to hold the container. Further, when the content is squeezed out, unlike the container made of HDPE or PET, the condiment may easily be squeezed out by pushing any portion of the body 12 at the virtual line 16 having a height of 1/3 from the top.

### 3. Modification Example 2-1 and Modification Example 2-2

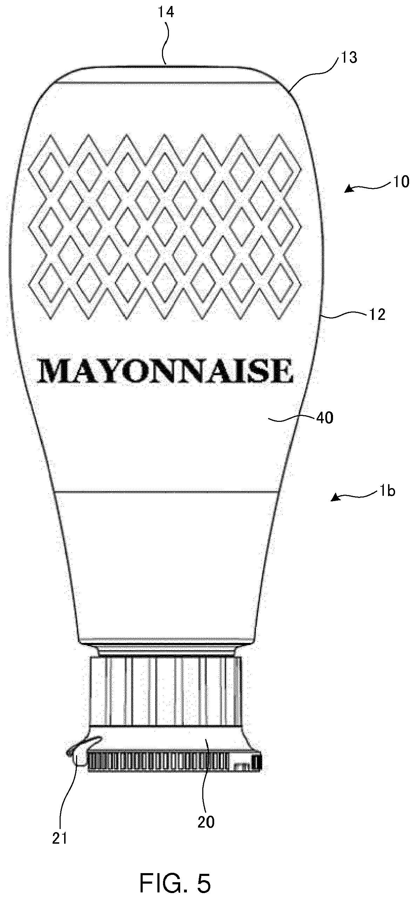

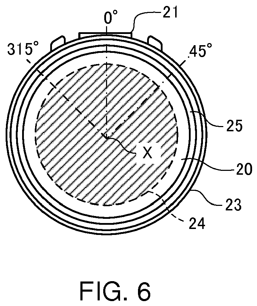

Next, a liquid condiment container 1b according to Modification Example 2-1 of the present invention and a liquid condiment container 1c according to Modification Example 2-2 of the present invention are described with reference to FIG. 5, FIG. 6, and FIG. 7. FIG. 5 is a front view for illustrating the liquid condiment container 1b according to Modification Example 2-1 in the inverted state. FIG. 6 is a plan view of the cap 20 of the liquid condiment container 1baccording to Modification Example 2-1. FIG. 7 is a front view for illustrating the liquid condiment container 1c according to Modification Example 2-2 in the upright state.

At least a surface region of the body 12, which extends from a position at the virtual line 16 having a height of 2/3 of the entire height of the body 12 or on a lower side (upper side in the inverted state of FIG. 5) thereof to a position at a height of 10 mm from the ground portion 15 or on an upper side (lower side of FIG. 5 in the inverted state) thereof, may be covered with a heat-shrinkable film 40. The body 12 is thus covered. Therefore, even when a part of the content is discharged to deform the body 12, the deformation of the body 12, in which the long axis R side attempts to extend, is suppressed by the heat-shrinkable film 40, and hence the body 12 is more likely to return to the initial shape. The liquid condiment container 1b according to Modification Example 2-1 has the same configuration as that of the liquid condiment container 1 according to the above-mentioned embodiment except for the heat-shrinkable film 40, and hence description thereof is omitted. Further, the liquid condiment container 1c according to Modification Example 2-2 has the same configuration as that of the liquid condiment container 1b according to Modification Example 2-1 except for the cap 20, and hence description thereof is omitted.

Letters of "MAYONNAISE" displayed on the surface of the bottle 10 or a surface of a covering material (heat-shrinkable film 40 in this case) covering the surface of the bottle 10 may be displayed upside down in the upright state of the bottle 10. That is, it is expected that the user checks the letters and puts the container on a table or the like in the inverted state with the cap 20 being positioned downward. When the closed state of the cap 20 is insufficient, the self-standing property of the liquid condiment container 1b becomes unstable, and hence the user may be urged to close the cap 20 accurately. Further, even when the liquid condiment container 1b is displayed in the inverted state, the product is easily identified.

As illustrated in FIG. 6, an area of a region surrounded by the upper end edge 23 of the cap 20 may be set to be larger than an area of a region (range indicated by the hatched line) surrounded by a lower end edge 24 of the cap 20. With this, the stability of the liquid condiment container 1b in the inverted state is improved.

Further, the cap 20 includes a finger hook 22 (FIG. 1) that is broadened toward the upper end edge 23 in a direction along the center axis X in a range having a clockwise angle of from 45° to 315° with a center of the hinge 21 being defined to be 0° when the cap 20 is viewed from above as illustrated in FIG. 6. The finger hook 22 may be considered as a difference in diameter between the upper end edge 23 and the lower end edge 24. The force for pushing the finger hook 22 required for opening the cap 20 may be set to 20 N or less. As described above, the cap 20 may easily be opened by pushing the finger hook 22 in a wide range of the entire circumference of the cap 20, and hence the user may save time and labor for checking the direction of the cap 20.

### 4. Modification Example 3

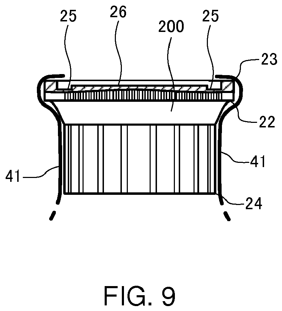

Next, a cap 200 of a liquid condiment container according to Modification Example 3 of the present invention is described with reference to FIG. 9. FIG. 9 is a front view of the cap 200 of the liquid condiment container according to Modification Example 3. Although the bottle 10 on a lower side of the cap 200 is omitted, the bottle 10 has the same structure as those of the liquid condiment container 1 according to the above-mentioned embodiment, and the liquid condiment containers 1a and 1b according to Modification Examples 1 and 2. Further, a portion in the vicinity of an upper end of the cap 200 is illustrated as a vertical cross section with a part thereof being cut away.

A heat-shrinkable film 41 has an upper end that may cover the cap 200 up to the upper end edge 23 of the cap 200. With this, the heat-shrinkable film 41 serves to prevent unauthorized opening of the cap 200. The reason for this is that the cap 200 cannot be opened unless the heat-shrinkable film 41 is peeled.

The cap 200 has a recessed portion 25 formed in an inner side of the upper end edge 23. The recessed portion 25 has the same configuration as that of an annular shape illustrated in FIG. 6. The cap 200 has a circular upper surface 26 further on an inner side of the recessed portion 25. That is, when viewed based on the height, the cap 200 includes the upper end edge 23 at the highest position, followed by the upper surface 26, and the recessed portion 25 at the lowest position. The distal end of the heat-shrinkable film 41 extends up to the inner side beyond the upper end edge 23 of the cap 200 to reach an upper region of the recessed portion 25. When the user peels the heat-shrinkable film 41, the user may insert the finger between the heat-shrinkable film 41 and the recessed portion 25, and hence it is easy for the user to peel the heat-shrinkable film 41. Further, the upper surface 26 on the inner side of the recessed portion 25 is lower than the upper end edge 23, and hence a gap is formed in a height direction between the heat-shrinkable film 41 and the upper surface 26. Accordingly, the user may easily peel the heat-shrinkable film 41 by inserting the finger into the gap.

When the condiment filled in the liquid condiment container 1 is an acidic emulsified liquid condiment obtained by emulsifying edible oil and an acidic slurry, it is preferred that the heat-shrinkable film 41 have a transmittance of UV-rays having a wavelength of 253.7 nm of 0.1% or less. The wavelength was measured with a general ultraviolet-visible spectrophotometer. In this case, measurement was performed by fixing a film in a sample chamber through use of U-2010 manufactured by Hitachi Ltd., and the ratio of light transmitted through the heat-shrinkable film 41 with respect to light transmitted through air was determined. The reason for this is that the heat-shrinkable film 41 may prevent degradation of the acidic emulsified liquid condiment caused by UV-rays. In order to set the transmittance of UV-rays having a wavelength of 253.7 nm to 0.1% or less, it is preferred that stretched polyester or stretched polystyrene of 0.01 mm or more be used as the heat-shrinkable film 41. Further, the transmittance of UV-rays having a wavelength of 253.7 nm may also be decreased by blending titanium oxide in a resin to be used in the heat-shrinkable film 41 or performing printing with an ink containing titanium oxide.

### 5. Packaged Liquid Condiment

A packaged liquid condiment has a feature of being filled in the liquid condiment container 1 according to the above-mentioned embodiment and the liquid condiment containers 1a and 1b according to Modification Examples 1 to 3. When the content is discharged, the bottle 10 is flexibly deformed, and hence a high-viscosity liquid condiment may be filled in the bottle 10.

### Examples

In Examples 1 to 4, which are part of the scope of the present invention, experiments and evaluations were performed regarding (1) y/x^{2/3}, (2) pressure after elapse of 30 seconds from suction, (3) form after 50% use, (4) ease of pushing out content, (5) form after 50% use of a heat-shrinkable film product, and (6) ease of pushing out content in the heat-shrinkable film product, through use of four kinds of containers having different initial capacities described in the liquid condiment container 1 according to the above-mentioned embodiment. Each container of Examples 1 to 4 had an outer appearance of the liquid condiment container 1 of FIG. 8. Each container of Examples 1 to 4 was obtained by direct blow molding through use of LDPE while adjusting the thickness of the body.

In Comparative Examples 1 to 13, which are not part of the scope of the present invention, the same evaluations as those of Examples 1 to 4 were performed through use of commercially available condiment containers. Specifically, Comparative Example 1 was a container of "KEWPIE Mayonnaise ("KEWPIE Mayonnaise" is a registered Japanese trademark by Kewpie Corporation)" (internal volume: about 130 cm³) manufactured by Kewpie Corporation. Comparative Example 2 was a container of "KEWPIE Mayonnaise" (internal volume: about 200 cm³) manufactured by Kewpie Corporation. Comparative Example 3 was a container of "KEWPIE Mayonnaise" (internal volume: about 350 cm³) manufactured by Kewpie Corporation. Comparative Example 4 was a container of "KEWPIE Mayonnaise" (internal volume: about 450 cm³) manufactured by Kewpie Corporation. Comparative Example 5 was a container of "KEWPIE Mayonnaise" (internal volume: about 700 cm³) manufactured by Kewpie Corporation. Comparative Example 6 was a container of "KEWPIE Mayonnaise" (internal volume: about 1,000 cm³) manufactured by Kewpie Corporation. Each container of Comparative Examples 1 to 6 had an external appearance of the liquid condiment container 50 illustrated in FIG. 7, and each container of Comparative Examples 1 to 6 was obtained by direct blow molding through use of LDPE. Comparative Example 7 was a container of "Styling Sauce ("Styling Sauce" is a registered Japanese trademark by Kewpie Corporation)" (internal volume: 280 cm³) manufactured by Kewpie Corporation. Comparative Example 8 (internal volume: about 200 cm³) and Comparative Example 9 (internal volume: about 500 cm³) were condiment containers manufactured by an unknown manufacturer. Comparative Example 10 was a container of "Best Foods Real Mayonnaise" (internal volume: about 591 cm³) manufactured by Unilever. Comparative Example 11 was a container of "Tomato Ketchup" (internal volume: about 460 cm³) manufactured by H. J. Heinz Company. Comparative Example 12 was a container of "Pizza Sauce" (internal volume: about 160 cm³) manufactured by Kagome Co., Ltd.. Comparative Example 13 was a container of "Chocolate Syrup" (internal volume: about 260 cm³) manufactured by the Hershey Company. The container of Comparative Example 7 had an external appearance of the liquid condiment container 51 illustrated in FIG 8. The container of Comparative Example 10 had an external appearance of the liquid condiment container 52 illustrated in FIG 8. The container of Comparative Example 11 had an external appearance of the liquid condiment container 53 illustrated in FIG 8. The container of Comparative Example 12 had an external appearance of the liquid condiment container 54 illustrated in FIG 8. The container of Comparative Example 13 had an external appearance of the liquid condiment container 55 illustrated in FIG 8. Based on the notations or the FTIR analysis (library search using AVATAR 370 DTGS manufactured by NICOLET), each container of Comparative Examples 7 to 9 is considered as a container obtained by direct blow molding through use of HDPE. Comparative Examples 10 and 11 are considered as containers obtained by injection stretch blow molding through use of PET. Comparative Examples 12 and 13 are considered as containers obtained by direct blow molding through use of PP.

The details of evaluation items are described below, and evaluation results were shown in Tables 1 to 3.

### (1) y/x^{2/3}

Regarding Examples 1 to 4 and Comparative Examples 1 to 13, values obtained by calculating an initial volume x (cm³) in the condiment container and a basis weight y (g) of a bottle excluding a mouth by a numerical expression (y/x^{2/3}) were shown in Tables 1 to 3. Further, regarding the relationship between y and x in Examples 1 to 4, y/x^{2/3} falling within a range of from 0.35 to 0.65 based on the values of the numerical expression (y/x^{2/3}) of Table 1 was shown in a graph of FIG. 11. Further, the values of the numerical expression (y/x^{2/3}) in Comparative Examples 1 to 5 of Table 2 were shown in the graph of FIG. 11. Two solid lines represent the following: a solid line Eb represents y/x^{2/3}=0.35; and a solid line Ea represents y/x2/3=0.65. Examples 1 to 4 were represented by E1 to E4. A broken line Ca represents a relational expression derived from the results of Comparative Examples 1 to 5. Comparative Examples 1 to 5 were represented by C1 to C5.

The basis weight of the bottle excluding the mouth being raised to the power 2/3 is described below. When containers having the same thickness and different sizes are molded, the basis weight of the bottle excluding the mouth is proportional to the surface area of the bottle excluding the mouth. That is, the basis weight is proportional to the second power of the length of a part of the bottle. Meanwhile, the initial volume is represented by a volume, and hence is proportional to the third power of the length of a part of the bottle. That is, even when the containers having different sizes are molded, the relationship between the initial volume x (cm³) and the basis weight y (g) of the bottle excluding the mouth may be derived by being represented by y/x^{2/3}.

### (2) Pressure after Elapse of 30 Seconds from Suction

Air in a bottle was sucked by 10% of the initial volume from a state in which the bottle was completely filled with the air, and the inner pressure of the bottle after 30 seconds from the suction was measured. More specifically, a mouth of an empty bottle was connected to a rubber stopper, and the rubber stopper was connected to a syringe and a pressure gauge, through a nylon tube having an inner diameter of 4 mm and a length of about 250 mm. The air was extracted by 10% of the initial volume through use of the syringe, and the pressure in the bottle after elapse of 30 seconds was measured.

### (3) Form after 50% Use

50% of the initial volume of a liquid condiment container (liquid condiment container 1 of FIG. 1 to FIG. 3) that was not covered with a heat-shrinkable film was discharged at once, and a cap was closed immediately after the hand was taken off the liquid condiment container. The form of the liquid condiment container at this time was observed.

The details of evaluation items are as follows.
A: No concaves or unnoticeable concaves, if any, are observed, and the shape remains unchanged as compared to that before use.
B: Concaves are slightly observed, but the bottle is not inclined even when being inverted.
C: Concaves are observed, and the bottle is slightly inclined when being inverted.
D: Concaves are significantly observed, and the bottle is bent when being inverted.
E: Concaves are significantly observed, and the bottle falls even before being inverted. Thus, the bottle cannot be inverted stably.

### (4) Ease of Pushing out Content

Ease of discharging the content, when the liquid condiment container filled with mayonnaise was pushed with the finger, was evaluated based on the following evaluation items.
A: Any portion of the front and rear surfaces of the bottle is soft to push, and the content may be discharged by the pushed amount of the bottle.
B: About a half of an area of the front and rear surfaces of the bottle is soft, and the content may be discharged by the pushed amount of the bottle.
C: In a part of an area of the front and rear surfaces of the bottle, the content may be discharged by the pushed amount of the bottle.
D: The content (about 10% of the initial volume) may be discharged by application of a force.
E: The content (about 10% of the initial volume) cannot be discharged until the bottle is pushed several times.

### (5) Form after 50% Use of Heat-shrinkable Film Product

50% of the initial volume of a liquid condiment container (liquid condiment container 1b of FIG. 5) that was covered with a heat-shrinkable film was discharged at once, and a cap was closed immediately after the hand was taken off the liquid condiment container. The form of the liquid condiment container at this time was observed. The evaluation items were the same as in Evaluation (3).

### (6) Ease of Pushing out Content in Heat-shrinkable Film Product

Ease of discharging the content when the liquid condiment container, which was filled with mayonnaise and was covered with the heat-shrinkable film, was pushed with the finger was evaluated. The evaluation items were the same as in Evaluation (4).

### (7) Pressure after Elapse of 30 seconds from Suction in Heat-shrinkable Film Product

Air in each of the bottles of Comparative Examples 12 and 13, which was covered with a heat-shrinkable film, was sucked by 10% of the initial volume from a state in which each of the bottles was completely filled with the air, and the inner pressure of each of the bottles after 30 seconds from the suction was measured. The evaluation items were the same as in Evaluation (2).

**[Table 1]**

| | Example 1 | Example 2 | Example 3 | Example 4 |
|---|---|---|---|---|
| Material | LDPE | LDPE | LDPE | LDPE |
| Initial volume x (cm³) | 150 | 220 | 355 | 285 |
| Basis weight y (g) | 10.4 | 15.4 | 25.6 | 18.2 |
| y/x^(2/3) | 0.37 | 0.42 | 0.51 | 0.42 |
| Pressure after elapse of 30 seconds from suction (kPa) | -1.1 | -2.3 | -2.8 | -1.5 |
| Form after 50% use | B | B | B | B |
| Ease of pushing out content | B | B | A | B |
| Form after 50% use of heat-shrinkable film product | A | A | A | A |
| Ease of pushing out content in heat-shrinkable film product | B | B | A | B |

**[Table 2]**

| | Comparative Example 1 | Comparative Example 2 | Comparative Example 3 | Comparative Example 4 | Comparative Example 5 | Comparative Example 6 |
|---|---|---|---|---|---|---|
| Material | LDPE | LDPE | LDPE | LDPE | LDPE | LDPE |
| Initial volume x (cm3) | 130 | 200 | 350 | 450 | 700 | 1,000 |
| Basis weight y (g) | 5.86 | 7.1 | 12.36 | 14.4 | 20.66 | 25.1 |
| y/x^(2/3) | 0.23 | 0.21 | 0.25 | 0.24 | 0.26 | 0.25 |
| Pressure after elapse of 30 seconds from suction (kPa) | - | -0.3 | - | -0.1 | - | -0.2 |
| Form after 50% use | - | D | - | E | - | E |
| Ease of pushing out content | - | A | | A | - | A |
| Form after 50% use of heat-shrinkable film product | - | C | - | C | - | D |
| Ease of pushing out content in heat-shrinkable film product | - | A | - | A | - | A |

**[Table 3]**

| | Comparative Example 7 | Comparative Example 8 | Comparative Example 9 | Comparative Example 10 | Comparative Example 11 | Comparative Example 12 | Comparative Example 13 |
|---|---|---|---|---|---|---|---|
| Material | HDPE | HDPE | HDPE | PET | PET | PP | PP |
| Initial volume x (cm3) | 280 | 200 | 500 | 591 | 460 | 160 | 260 |
| Basis weight y (g) | 34 | 16.8 | 34.1 | 30.9 | 23.1 | 14.1 | 14.3 |
| y/x^(2/3) | 0.79 | 0.49 | 0.54 | 0.44 | 0.39 | 0.48 | 0.35 |
| Pressure after elapse of 30 seconds from suction (kPa) | -4.8 | -6.5 | -5.3 | -6.6 | -4.2 | -6.2 | -6.4 |
| Form after 50% use | A | A | A | A | -^{∗} | -^{∗} | -^{∗} |
| Ease of pushing out content | D | D | D | D | D | D | E |
| Pressure after elapse of 30 seconds from suction (kPa) of heat-shrinkable film product | - | - | - | - | - | -6.5 | -5.2 |
| Form after 50% use of heat-shrinkable film product | - | - | - | - | - | -* | -* |
| Ease of pushing out content in heat-shrinkable film product | - | - | - | - | - | D | E |

| | | | | | | | |
|---|---|---|---|---|---|---|---|
| *It was impossible to discharge 50% of the content at once by hand. | | | | | | | |

### (8) Pushing Force Distribution on Front Surface of Body

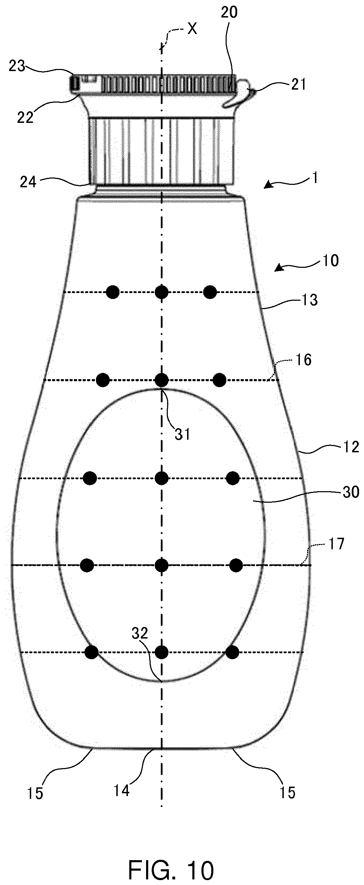

Regarding the liquid condiment containers of Examples 1, 2, and 3, and Comparative Examples 2, 4, 6, and 8, as illustrated in FIG. 10, pushing forces (N: Newton) were measured at intersection points (points indicated by the black solid circles) obtained by dividing a front surface (orthographic projection surface orthogonal to the short axis), a right side surface, and a left side surface of the body 12 by six in the vertical direction and by four in the horizontal direction. More specifically, a highest pushing force (N) was measured under the measurement condition of a temperature of 25°C as follows. A mouth of an empty bottle was connected to a rubber stopper connected to a nylon tube. While the amount of air discharged by a water displacement method was measured, the front surface and the rear surface were pushed with a push rod having a circular pressing surface with a diameter of 10 mm in a direction parallel to the short axis at a descent speed of 32.22 mm/min under a state in which the bottle was completely filled with the air until the air in the bottle was discharged by 10% of the initial volume. The measurement results were shown in Tables 4 and 5.

Further, the pushing force is expressed as a force of pushing with one forefinger as described below.

Less than 7N: A degree at which the bottle is lightly pushed with the finger.

7N or more and less than 14N: A degree at which the bottle is relatively strongly pushed with the finger.

14N or more and less than 21N: A degree at which the bottle is significantly strongly pushed with the finger.

21N or more: A degree at which it cannot be said that the content is discharged by pushing with one finger.

**[Table 4]**

| | Height from ground portion | Example 1 | Example 2 | Example 3 |
|---|---|---|---|---|
| Left side surface | 5/6 (Upper side) | 27.2 | 36.1 | 38.2 |
| | 4/6 | 11.5 | 16.6 | 19.7 |
| | 3/6 | 6.7 | 9.9 | 10.2 |
| | 2/6 | 7.8 | 10.5 | 11.3 |
| | 1/6 (Lower side) | 9.4 | 18.0 | 19.5 |
| Front surface (center) | 5/6 (Upper side) | 26.0 | 24.6 | 23.8 |
| | 4/6 | 10.1 | 9.9 | 9.6 |
| | 3/6 | 7.5 | 10.2 | 10.3 |
| | 2/6 | 7.0 | 9.8 | 9.7 |
| | 1/6 (Lower side) | 9.0 | 19.3 | 20.2 |
| Right side surface | 5/6 (Upper side) | 26.6 | 30.9 | 35.5 |
| | 4/6 | 11.3 | 13.4 | 15.2 |
| | 3/6 | 7.6 | 10.6 | 10.2 |
| | 2/6 | 7.9 | 10.6 | 10.5 |
| | 1/6 (Lower side) | 8.2 | 15.8 | 16.3 |

**[Table 5]**

| | Height from ground portion | Comparative Example 2 | Comparative Example 4 | Comparative Example 6 | Comparative Example 8 |
|---|---|---|---|---|---|
| Left side surface | 5/6 (Upper side) | 13.6 | 22.1 | 19.6 | 105.6 |
| | 4/6 | 3.7 | 8.3 | 8.8 | 78.2 |
| | 3/6 | 2.5 | 4.0 | 6.4 | 62.8 |
| | 2/6 | 2.0 | 3.6 | 5.6 | 86.1 |
| | 1/6 (Lower side) | 2.9 | 5.0 | 5.6 | 87.1 |
| Front surface (center) | 5/6 (Upper side) | 13.5 | 18.6 | 19.9 | 117.0 |
| | 4/6 | 4.5 | 7.2 | 9.5 | 78.4 |
| | 3/6 | 2.4 | 3.9 | 6.9 | 55.6 |
| | 2/6 | 2.2 | 4.0 | 4.5 | 77.1 |
| | 1/6 (Lower side) | 3.5 | 5.0 | 5.0 | 101.6 |
| Right side surface | 5/6 (Upper side) | 13.8 | 21.9 | 16.8 | 107.5 |
| | 4/6 | 5.7 | 9.1 | 9.5 | 72.0 |
| | 3/6 | 2.7 | 4.8 | 6.3 | 57.4 |
| | 2/6 | 2.3 | 4.0 | 5.3 | 82.1 |
| | 1/6 (Lower side) | 3.1 | 4.8 | 5.1 | 106.0 |

### (9) Thickness of Body

The thickness (mm) of the bottle of Example 2 in the upright state when being cut on a flat surface including the short axis was measured. Measurement was performed at five positions obtained by dividing the body excluding the mouth by six in the height direction. The measurement results were shown in Table 6. "1/6" to "5/6" in Table 6 represent heights from the ground portion 15.

**[Table 6]**

| Height from ground portion | Example 1 | Example 2 | Example 3 |
|---|---|---|---|
| 5/6 | 0.64 | 0.77 | 0.95 |
| 4/6 (Substantially upper end of panel) | 0.56 | 0.62 | 0.85 |
| 3/6 (Center of panel: upper side of most concave portion) | 0.55 | 0.72 | 0.90 |
| 2/6 (Center of panel: lower side of most concave portion) | 0.58 | 0.71 | 1.04 |
| 1/6 (Substantially lower end of panel) | 0.59 | 0.58 | 1.03 |

**[Table 7]**

| Height from ground portion | Comparative Example 2 | Comparative Example 4 | Comparative Example 6 | Comparative Example 8 |
|---|---|---|---|---|
| 5/6 | 0.63 | 0.48 | 0.54 | 0.66 |
| 4/6 | 0.46 | 0.34 | 0.49 | 0.76 |
| 3/6 | 0.38 | 0.34 | 0.41 | 0.78 |
| 2/6 | 0.35 | 0.34 | 0.35 | 0.71 |
| 1/6 | 0.40 | 0.38 | 0.36 | 0.64 |

### (10) Cap Release Strength

Pushing forces (N) for pushing the finger hook 22 required for opening the cap 20 were measured at clockwise angles of 45°, 135°, 225°, and 315° with a center of the hinge 21 being defined to be 0° when the cap 20 was viewed from above as illustrated in FIG. 6. A measurement method was described below. The liquid condiment container with the cap being positioned downward was fixed so as to be inclined by 45° from a vertical line. The finger hook of the cap was subjected to a pushing test machine including a push rod having a circular pressing surface with a diameter of 10 mm. A highest pushing force (N), at which the push rod pushed the finger hook at a descent speed of 32.22 mm/min to release the cap, was obtained. The measurement results are shown in Table 7.

**[Table 8]**

| Position (°) | Cap release strength (N) |
|---|---|
| 45 | 15.6 |
| 135 | 8 |
| 225 | 9.4 |
| 315 | 15.4 |

### (11) Ratio between Cap Top Surface and Largest Width Portion

The ratio (L5/L2) between the largest width L5 of the top surface (ground surface) of the cap 20 that was grounded when the liquid condiment container 1 was inverted and the largest width L2 of the body 12 was measured. The measurement results are shown in Table 9. The ratios (L5/L2) of Examples 2 to 4 were more than 0.40.

Further, mayonnaise of the initial volume was filled into the liquid condiment container 1, and 50% of the initial volume was discharged at once. The hand was taken off the liquid condiment container 1, and the cap 20 was closed. Then, the liquid condiment container 1 was placed in the inverted state on a table having a surface formed of a melamine facing plate, and the largest width portion 18 was slowly pushed with the finger along the long axis R. The ease of falling of the liquid condiment container 1 at this time was shown in Table 9. Difficulty in falling was evaluated in five stages A to E (A: difficult to fall to E: easy to fall). In Examples 1 to 4 in which the ratio (L5/L2) between the largest width L5 of the top surface of the cap 20 and the largest width L2 of the body 12 was more than 0.40, the liquid condiment container 1 was less liable to fall. Further, when the ratio (L5/L2) is 0.50 or more, the liquid condiment container 1 becomes more stable.

**[Table 9]**

| | Ratio (L5/L2) between cap top surface and largest width portion of body | Evaluation |
|---|---|---|
| Example 1 | 0.64 | A |
| Example 2 | 0.62 | A |
| Example 3 | 0.45 | B |
| Example 4 | 0.78 | A |
| Comparative Example 2 | 0.40 | D |

### Reference Signs List

1, 1a, 1b, 1c ··· liquid condiment container, 10 ··· bottle, 11 ··· mouth, 12 ··· body, 13 ··· shoulder, 14 ··· bottom, 15 ··· ground portion, 16 ··· virtual line having height of 2/3 from ground portion, 17 ··· virtual line having height of 1/3 from ground portion, 18 ··· largest width portion, 20 ··· cap, 200 ··· cap, 20a ··· lower portion, 20b ··· upper portion, 21 ··· hinge, 22 ··· finger hook, 23 ··· upper end edge, 24 ··· lower end edge, 25 ··· recessed portion, 26 ··· upper surface, 30 ··· panel, 31 ··· upper end, 32 ··· lower end, 33 ··· center portion, 34 ··· middle point, 35 ··· most concave portion, 36 ··· irregularities, 40, 41 ··· heat-shrinkable film, 50 ··· liquid condiment container of Reference Example 1, 51 ···liquid condiment container of Reference Example 2, 52 ··· liquid condiment container of Reference Example 3, 53 ···liquid condiment container of Reference Example 4, 54 ··· liquid condiment container of Reference Example 5, 55 ··· liquid condiment container of Reference Example 6, Ca ···y/x^{2/3} of Comparative Examples 1 to 5, C1 to C5 ···Comparative Examples 1 to 5, Ea, Eb ··· y/x^{2/3} of Examples 1 to 4, E1 to E4 ··· Examples 1 to 4, H ··· entire height of body, H1 ··· height from upper end edge in inverted state to largest width portion, L1 ··· first distance, L2 ··· width in long axis (largest width of body), L3 ··· second distance, L4 ··· width in long axis, L5 ··· largest width of top surface of cap, Q ··· short axis, R ··· long axis, X ··· center axis, Y ··· virtual line

## Claims

1. A liquid condiment container (1) comprising:
a bottle (10); and
a cap (20),
the liquid condiment container (1) being to be filled with a condiment, which is a liquid condiment having a viscosity of from 5 Pa·s to 500 Pa·s,
an initial volume of the liquid condiment container (1) being from 100 cm³ to 700 cm³,
the bottle including a mouth (11), a body (12), and a bottom (14),
the mouth (11) being a portion to which the cap (20) is attached,
the bottom (14) having an outermost edge that serves as a ground portion (15) in an upright state with the mouth (11) being positioned upward,
the body (12) including a flat shape portion in horizontal transverse section in the upright state,
the flat shape portion having a short axis (Q) and a long axis (R) that are orthogonal to a center axis (X) of the bottle (10),
the body (12) having a front surface and a rear surface that cross the short axis (Q),
the bottle (10) having a single layer structure made of a low-density polyethylene as a main component or a multilayer structure including one or more layers made of a low-density polyethylene as a main component,
the one or more layers made of the low-density polyethylene as the main component in the multilayer structure having a total thickness of 80% or more of a thickness of the bottle, **characterized in that**
the liquid condiment container (1) satisfies y/x^{2/3} of from 0.35 to 0.65, where x (cm³) represents the initial volume, and y (g) represents a basis weight of the bottle (10) excluding the mouth (11),
the bottle (10) has an inner pressure of from -1.0 kPa to -3.0 kPa after 30 seconds from suction of air in the bottle by 10% of the initial volume from a state in which the bottle (10) is completely filled with the air and with a temperature at the time of measurement of 25°C, and
the low-density polyethylene is produced by a high pressure method and has a bending modulus of from 130 MPa to 370 MPa based on a JIS K6922-2 method.

2. The liquid condiment container (1) according to claim 1, wherein the body (12) includes a region from the ground portion (15) to a height of 2/3 of the entire height (H) of the body (12), the region being the flat shape portion.

3. The liquid condiment container according to claim 1 or 2, wherein the body has a thickness of 0.4 mm or more and 1.1 mm or less in the region from the ground portion to the height of 2/3 of the entire height of the body.

4. The liquid condiment container (1) according to any one of claims 1 to 3, further comprising a panel (30) on each of the front surface and the rear surface.

5. The liquid condiment container (1) according to claim 4, wherein the panel (30) has a second projection area projected onto an orthographic projection surface, which is a flat surface perpendicular to the short axis (Q), and being 60% or less of a first projection area of the body (12) projected onto the orthographic projection surface.

6. The liquid condiment container (1) according to claim 4 or 5,
wherein the panel (30) has a thickness of 0.5 mm or more and 1.1 mm or less in the panel (30), and has a thickness of 0.90 mm or less at the upper end (31) of the panel (30) that crosses the short axis (Q), and
wherein the thickness of the upper end (31) is smaller than a thickness of a center portion (33) of the panel (30).

7. The liquid condiment container (1) according to any one of claims 4 to 6, wherein, in an interval between the panel (30) on the front surface and the panel (30) on the rear surface at a position where the panel (30) on the front surface and the panel (30) on the rear surface cross the short axis (Q) in the upright state of the bottle (10), the panel (30) on the front surface and the panel (30) on the rear surface have a first distance (L1) between most concave portions, in which the interval between the panel (30) on the front surface and the panel (30) on the rear surface becomes smallest, of from 0.7 to 1.0 with respect to a second distance (L3) between the lower end (32) of the panel (30) on the front surface and the lower end (32) of the panel (30) on the rear surface.

8. The liquid condiment container (1b) according to any one of claims 1 to 7, wherein the body (12) includes a surface region covered with a heat-shrinkable film (40) that extends at least from a position at a height of 2/3 or less of the entire height of the body (12) to a position at a height of 10 mm or more from the ground portion (15).

9. The liquid condiment container (1b) according to claim 8,
wherein the condiment is an acidic emulsified liquid condiment obtained by emulsifying edible oil and an acidic slurry, and
wherein the heat-shrinkable film (40) has a transmittance of UV-ray at a wavelength of 253.7 nm of 0.1% or less.

10. The liquid condiment container (1b) according to any one of claims 1 and 9, wherein letters or characters are displayed on a surface of the bottle (10) or on a surface of a covering material covering the surface of the bottle (10), and displayed upside down in the upright state of the bottle (10).

11. The liquid condiment container (1) according to any one of claims 1 to 10, wherein the initial volume of the liquid condiment container (1) is 500 cm³ or less.

12. The liquid condiment container (1) according to any one of claims 1 to 11, wherein an area of a region surrounded by the upper end edge (23) of the cap (20) is larger than an area of a region surrounded by a lower end edge (24) of the cap (20).

13. The liquid condiment container (1) according to any one of claims 1 to 12,
wherein the cap (20) includes a finger hook (22) that is broadened toward the upper end edge (23) in a direction along the center axis (X) at a clockwise angle of from 45° to 315° with a center of a hinge (21) being defined to be 0° when the cap (20) is viewed from above, and
wherein a force for pressing the finger hook (22) required for opening the cap (20) is 20 N or less.

14. The liquid condiment container (1) according to any one of claims 1 to 13, wherein an average value of a width of the body (12) in the long axis (R) from the ground portion (15) to the height of 2/3 of the entire height (H) of the body (12) is of from 1.4 times to 1.6 times an average value of a width of the body (12) in the long axis (R) on an upper side of the height of 2/3.

15. The liquid condiment container (1) according to any one of claims 1 to 14, wherein, in a largest width portion (18) in which the width of the body (12) in the long axis (R) becomes largest, a height of the largest width portion (18) in an inverted state of the bottle is from 1.5 times to 1.7 times a width of the largest width portion (18) of the body (12).

16. A packaged liquid condiment filled in the liquid condiment container (1) of any one of claims 1 to 15.

## Patentansprüche

1. Behälter (1) für flüssiges Gewürz mit
einer Flasche (10), und
einer Kappe (20),
wobei der Behälter (1) für flüssiges Gewürz mit einem Gewürz zu füllen ist, das ein Flüssiggewürz mit einer Viskosität von 5 Pa.s bis 500 Pa.s ist,
ein Anfangsvolumen des Behälters (1) für flüssiges Gewürz von 100 cm³ bis 700 cm³ beträgt,
die Flasche eine Öffnung (11), einen Körper (12) und einen Boden (14) umfasst,
wobei die Öffnung (11) ein Abschnitt ist, an dem die Kappe (20) befestigt ist,
der Boden (14) einen äußersten Rand aufweist, der in einem aufrechten Zustand mit nach oben gerichteter Öffnung (11) als Bodenabschnitt (15) dient,
der Körper (12) in dem aufrechten Zustand einen flachen Formabschnitt im horizontalen Querschnitt umfasst,
wobei der flache Formabschnitt eine kurze Achse (Q) und eine lange Achse (R) aufweist, die orthogonal zu einer Mittelachse (X) der Flasche (10) sind,
der Körper (12) eine Vorderfläche und eine Rückfläche hat, die die kurze Achse (Q) kreuzen,
die Flasche (10) eine Einschichtstruktur aus einem Polyethylen niedriger Dichte als einer Hauptkomponente oder eine Mehrschichtstruktur, die eine oder mehrere Schichten aus einem Polyethylen niedriger Dichte als eine Hauptkomponente umfasst, aufweist,
wobei die eine oder die mehreren Schichten aus dem Polyethylen niedriger Dichte als Hauptkomponente in der Mehrschichtstruktur eine Gesamtdicke von 80 % oder mehr der Dicke der Flasche aufweisen, **dadurch gekennzeichnet, dass**
der Behälter (1) für flüssiges Gewürz einen Wert y/x^{2/3} von 0,35 bis 0,65 aufweist, wobei x (cm³) das Ausgangsvolumen und y (g) das Basisgewicht der Flasche (10) ohne die Öffnung (11) darstellt,
die Flasche (10) einen Innendruck von -1,0 kPa bis -3,0 kPa nach 30 Sekunden ab Ansaugen von Luft in der Flasche um 10 % des Ausgangsvolumens aus einem Zustand, in dem die Flasche (10) vollständig mit Luft gefüllt ist, und bei einer Temperatur zum Zeitpunkt der Messung von 25 °C aufweist, und
das Polyethylen niedriger Dichte durch ein Hochdruckverfahren hergestellt ist und einen Biegemodul von 130 MPa bis 370 MPa basierend auf einem JIS K6922-2-Verfahren aufweist.

2. Behälter (1) für flüssiges Gewürz nach Anspruch 1, wobei der Körper (12) einen Bereich vom Bodenabschnitt (15) bis zu einer Höhe von 2/3 der Gesamthöhe (H) des Körpers (12) umfasst, wobei der Bereich der flache Formabschnitt ist.

3. Behälter (1) für flüssiges Gewürz nach Anspruch 1 oder 2, wobei der Körper eine Dicke von 0,4 mm oder mehr und 1,1 mm oder weniger in dem Bereich vom Bodenabschnitt bis zu der Höhe von 2/3 der Gesamthöhe des Körpers aufweist.

4. Behälter (1) für flüssiges Gewürz nach einem der Ansprüche 1 bis 3, der ferner ein Platte (30) an der Vorder- und der Rückfläche umfasst.

5. Behälter (1) für flüssiges Gewürz nach Anspruch 4, wobei die Platte (30) eine zweite Projektionsfläche aufweist, die auf eine orthografische Projektionsfläche projiziert ist, bei der es sich um eine ebene Fläche senkrecht zur kurzen Achse (Q) handelt, und die 60 % oder weniger einer ersten Projektionsfläche des Körpers (12) beträgt, die auf die orthografische Projektionsfläche projiziert ist.

6. Behälter (1) für flüssiges Gewürz nach Anspruch 4 oder 5,
wobei die Platte (30) eine Dicke von 0,5 mm oder mehr und 1,1 mm oder weniger in der Platte (30) hat und eine Dicke von 0,90 mm oder weniger am oberen Ende (31) der Platte (30) hat, das die kurze Achse (Q) kreuzt, und
wobei die Dicke des oberen Endes (31) kleiner ist als die Dicke eines mittleren Abschnitts (33) der Platte (30).

7. Behälter (1) für flüssiges Gewürz nach einem der Ansprüche 4 bis 6, wobei in einem Zwischenraum zwischen der Platte (30) auf der Vorderfläche und der Platte (30) auf der Rückfläche an einer Position, an der die Platte (30) auf der Vorderfläche und die Platte (30) auf der Rückfläche die kurze Achse (Q) im aufrechten Zustand der Flasche (10) kreuzen, die Platte (30) auf der Vorderfläche und die Platte (30) auf der Rückfläche einen ersten Abstand (L1) zwischen den konkavsten Abschnitten, in dem der Abstand zwischen der Platte (30) auf der Vorderfläche und der Platte (30) auf der Rückfläche am kleinsten ist, von 0,7 bis 1,0 in Bezug auf einen zweiten Abstand (L3) zwischen dem unteren Ende (32) der Platte (30) auf der Vorderfläche und dem unteren Ende (32) der Platte (30) auf der Rückfläche aufweisen.

8. Behälter (1b) für flüssiges Gewürz nach einem der Ansprüche 1 bis 7, wobei der Körper (12) einen Oberflächenbereich umfasst, der mit einer wärmeschrumpfenden Folie (40) bedeckt ist, die sich mindestens von einer Position in einer Höhe von 2/3 oder weniger der Gesamthöhe des Körpers (12) bis zu einer Position in einer Höhe von 10 mm oder mehr über dem Bodenabschnitt (15) erstreckt.

9. Behälter (1b) für flüssiges Gewürz nach Anspruch 8,
wobei das Gewürz ein saures emulgiertes flüssiges Gewürz ist, das durch Emulgieren von Speiseöl und einer sauren Aufschlämmung erhalten wird, und
wobei die wärmeschrumpfbare Folie (40) eine Durchlässigkeit für UV-Strahlung bei einer Wellenlänge von 253,7 nm von 0,1 % oder weniger aufweist.

10. Behälter (1b) für flüssiges Gewürz nach einem der Ansprüche 1 und 9, wobei Buchstaben oder Zeichen auf einer Oberfläche der Flasche (10) oder auf einer Oberfläche eines Abdeckmaterials, das die Oberfläche der Flasche (10) bedeckt, dargestellt sind und im aufrechten Zustand der Flasche (10) auf dem Kopf stehend dargestellt sind.

11. Behälter (1) für flüssiges Gewürz nach einem der Ansprüche 1 bis 10, wobei das Ausgangsvolumen des Behälters (1) für flüssiges Gewürz 500 cm³ oder weniger beträgt.

12. Behälter (1) für flüssiges Gewürz nach einem der Ansprüche 1 bis 11, wobei eine Gegend, die von dem oberen Endrand (23) der Kappe (20) umgeben ist, größer ist als eine Gegend, die von einem unteren Endrand (24) der Kappe (20) umgeben ist.

13. Behälter (1) für flüssiges Gewürz nach einem der Ansprüche 1 bis 12,
wobei die Kappe (20) einen Fingerhaken (22) umfasst, der in Richtung des oberen Endrandes (23) in einer Richtung entlang der Mittelachse (X) in einem Winkel im Uhrzeigersinn von 45° bis 315° verbreitert ist, wobei ein Zentrum eines Scharniers (21) so definiert ist, dass es 0° beträgt, wenn die Kappe (20) von oben betrachtet wird, und
wobei eine Kraft zum Drücken des Fingerhakens (22), die zum Öffnen der Kappe (20) erforderlich ist, 20 N oder weniger beträgt.

14. Behälter (1) für flüssiges Gewürz nach einem der Ansprüche 1 bis 13, wobei ein Durchschnittswert einer Breite des Körpers (12) in der Längsachse (R) vom Bodenabschnitt (15) bis zur Höhe von 2/3 der Gesamthöhe (H) des Körpers (12) das 1,4- bis 1,6-fache eines Durchschnittswertes einer Breite des Körpers (12) in der Längsachse (R) auf einer Oberseite der Höhe von 2/3 beträgt.

15. Behälter (1) für flüssiges Gewürz nach einem der Ansprüche 1 bis 14, wobei in einem Abschnitt (18) mit der größten Breite, in dem die Breite des Körpers (12) in der Längsachse (R) am größten wird, eine Höhe des Abschnitts (18) mit der größten Breite in einem umgekehrten Zustand der Flasche das 1,5- bis 1,7-fache einer Breite des Abschnitts (18) mit der größten Breite des Körpers (12) beträgt.

16. Verpacktes flüssiges Gewürz, das in den Behälter (1) für flüssiges Gewürz nach einem der Ansprüche 1 bis 15 gefüllt ist.

## Revendications

1. Récipient de condiment liquide (1) comprenant :
une bouteille (10) ; et
un capuchon (20),
le récipient de condiment liquide (1) étant à remplir avec un condiment, qui est un condiment liquide présentant une viscosité de 5 Pa·s à 500 Pa·s,
un volume initial du récipient de condiment liquide (1) étant de 100 cm³ à 700 cm³,
la bouteille comportant un goulot (11), un corps (12), et un fond (14),
le goulot (11) étant une partie à laquelle le capuchon (20) est raccordé,
le fond (14) présentant un bord le plus extérieur qui sert de partie de sol (15) dans un état vertical avec le goulot (11) étant positionné vers le haut,
le corps (12) comportant une partie de forme plate dans une coupe transversale horizontale dans l'état vertical,
la partie de forme plate présentant un axe court (Q) et un axe long (R) qui sont orthogonaux à un axe central (X) de la bouteille (10),
le corps (12) présentant une surface avant et une surface arrière en intersection avec l'axe court (Q),
la bouteille (10) présentant une structure monocouche constituée d'un polyéthylène basse densité en tant que composant principal ou une structure multicouche comportant une ou plusieurs couches constituées d'un polyéthylène basse densité en tant que composant principal,
les une ou plusieurs couches constituées du polyéthylène basse densité en tant que composant principal dans la structure multicouche présentant une épaisseur totale de 80 % ou plus d'une épaisseur de la bouteille, **caractérisé en ce que**
le récipient de condiment liquide (1) satisfait y/x^{2/3} de 0,35 à 0,65, où x (cm³) représente le volume initial, et y (g) représente un poids de base de la bouteille (10) à l'exclusion du goulot (11),
la bouteille (10) présente une pression intérieure de -1,0 kPa à -3,0 kPa après 30 secondes d'aspiration d'air dans la bouteille par 10 % du volume initial à partir d'un état dans lequel la bouteille (10) est complètement remplie d'air et à une température au moment de mesure de 25°C, et
le polyéthylène basse densité est produit par un procédé à haute pression et présente un module de flexion de 130 MPa à 370 MPa sur la base d'un procédé JIS K6922-2.

2. Récipient de condiment liquide (1) selon la revendication 1, dans lequel le corps (12) comporte une région depuis la partie de sol (15) jusqu'à une hauteur de 2/3 de la hauteur totale (H) du corps (12), la région étant la partie de forme plate.

3. Récipient de condiment liquide selon la revendication 1 ou 2, dans lequel le corps présente une épaisseur de 0,4 mm ou plus et 1,1 mm au moins dans la région depuis la partie de sol jusqu'à la hauteur de 2/3 de la hauteur totale du corps.

4. Récipient de condiment liquide (1) selon l'une quelconque des revendications 1 à 3, comprenant en outre un panneau (30) sur chacune de la surface avant et la surface arrière.

5. Récipient de condiment liquide (1) selon la revendication 4, dans lequel le panneau (30) présente une seconde zone saillante faisant saillie sur une surface de saillie orthographique, qui est une surface plate perpendiculaire à l'axe court (Q), étant 60 % ou moins d'une première zone saillante du corps (12) faisant saillie sur la surface de saillie orthographique.

6. Récipient de condiment liquide (1) selon la revendication 4 ou 5,
dans lequel le panneau (30) présente une épaisseur de 0,5 mm ou plus et 1,1 mm ou moins dans le panneau (30), et présente une épaisseur de 0,90 mm ou moins à l'extrémité supérieure (31) du panneau (30) en intersection avec l'axe court (Q), et
dans lequel l'épaisseur de l'extrémité supérieure (31) est plus petite qu'une épaisseur d'une partie centrale (33) du panneau (30).

7. Récipient de condiment liquide (1) selon l'une quelconque des revendications 4 à 6, dans lequel, dans un intervalle entre le panneau (30) sur la surface avant et le panneau (30) sur la surface arrière à une position à laquelle le panneau (30) sur la surface avant et le panneau (30) sur la surface arrière sont en intersection avec l'axe court (Q) dans l'état vertical de la bouteille (10), le panneau (30) sur la surface avant et le panneau (30) sur la surface arrière présentent une première distance (L1) entre des parties les plus concaves, dans lesquelles l'intervalle entre le panneau (30) sur la surface avant et le panneau (30) sur la surface arrière devient le plus petit, de 0,7 à 1,0 par rapport à une seconde distance (L3) entre l'extrémité inférieure (32) du panneau (30) sur la surface avant et l'extrémité inférieure (32) du panneau (30) sur la surface arrière.

8. Récipient de condiment liquide (lb) selon l'une quelconque des revendications 1 à 7, dans lequel le corps (12) comporte une région de surface recouverte d'un film thermorétractable (40) qui s'étend au moins depuis une position à une hauteur de 2/3 ou moins de la hauteur totale du corps (12) jusqu'à une position à une hauteur de 10 mm ou plus depuis la partie de sol (15).

9. Récipient de condiment liquide (lb) selon la revendication 8,
dans lequel le condiment est un condiment liquide émulsifié acide obtenu par l'émulsification d'une huile comestible et d'une suspension acide, et
dans lequel le film thermorétractable (40) présente un facteur de transmission de rayons ultraviolets à une longueur d'onde de 253,7 nm de 0,1 % ou moins.

10. Récipient de condiment liquide (lb) selon l'une quelconque des revendications 1 à 9, dans lequel des lettres ou des caractères sont affichés sur une surface de la bouteille (10) ou sur une surface d'un matériau de recouvrement recouvrant la surface de la bouteille (10), et affichés à l'envers dans l'état vertical de la bouteille (10).

11. Récipient de condiment liquide (1) selon l'une quelconque des revendications 1 à 10, dans lequel le volume initial du récipient de condiment liquide (1) est 500 cm³ ou moins.

12. Récipient de condiment liquide (1) selon l'une quelconque des revendications 1 à 11, dans lequel une aire d'une région entourée par le bord d'extrémité supérieure (23) du capuchon (20) est plus grande qu'une aire d'une région entourée par un bord d'extrémité inférieure (24) du capuchon (20).

13. Récipient de condiment liquide (1) selon l'une quelconque des revendications 1 à 12,
dans lequel le capuchon (20) comporte un crochet de doigt (22) qui est élargi vers le bord d'extrémité supérieure (23) dans une direction le long de l'axe central (X) à un angle dans le sens horaire de 45° à 315° avec un centre d'une charnière (21) étant défini comme étant 0° lorsque le capuchon (20) est vu du dessus, et
dans lequel une force de pression du crochet de doigt (22) nécessaire pour ouvrir le capuchon (20) est 20 N ou moins.

14. Récipient de condiment liquide (1) selon l'une quelconque des revendications 1 à 13, dans lequel une valeur moyenne d'une largeur du corps (12) dans l'axe long (R) depuis la partie de sol (15) jusqu'à la hauteur de 2/3 de la hauteur totale (H) du corps (12) est de 1,4 fois à 1,6 fois une valeur moyenne d'une largeur du corps (12) dans l'axe long (R) sur un côté supérieur de la hauteur de 2/3.

15. Récipient de condiment liquide (1) selon l'une quelconque des revendications 1 à 14, dans lequel, dans une partie de la plus grande largeur (18) dans laquelle la largeur du corps (12) dans l'axe long (R) devient la plus grande, une hauteur de la partie de la plus grande largeur (18) dans un état retourné de la bouteille est de 1,5 fois à 1,7 fois une largeur de la partie de la plus grande largeur (18) du corps (12).

16. Condiment liquide conditionné rempli dans le récipient de condiment liquide (1) selon l'une quelconque des revendications 1 à 15.
